# EUROPÄISCHE PATENTSCHRIFT

(11) **EP 2 797 787 B1**
(45) Veröffentlichungstag und Bekanntmachung des Hinweises auf die Patenterteilung: **19.06.2019**
(21) Anmeldenummer: 12810227.4
(22) Anmeldetag: 19.12.2012
(51) Int. Cl.: B60S 1/40, B60S 1/38

(54) **WISCHBLATTVORRICHTUNG**
WIPER BLADE DEVICE
DISPOSITIF DE BALAI D'ESSUIE-GLACE

(30) Priorität: 27.12.2011 DE 102011089930
(43) Veröffentlichungstag der Anmeldung: 05.11.2014
(73) Patentinhaber: Robert Bosch GmbH, 70442 Stuttgart (DE)
(72) Erfinder: SAEVELS, Peter, B-3384 Attenrode (BE)
(86) Internationale Anmeldenummer: PCT/EP2012/076061
(87) Internationale Veröffentlichungsnummer: WO 2013/098143

(56) Entgegenhaltungen:
- WO-A1-2004/026646
- DE-A1- 2 501 661
- DE-U1-202010 000 197
- DE-U1-202010 000 198
- FR-A1- 2 871 127
- US-A1- 2010 000 041

## Beschreibung

### Stand der Technik

Die Erfindung geht aus von einer Wischblattvorrichtung nach dem Oberbegriff des Patentanspruchs 1.

Aus der DE 10 2009 014 700 A1 ist ein Wischblatt bekannt, welches über ein Befestigungselement fest mit einer Federschiene verbindbare Adapterelemente umfasst. Zu einer Anpassung an unterschiedliche Wischarmtypen sind unterschiedliche Adapterelemente vorgesehen, welche jeweils ein Drehlager für ein an einem Wischarm angeordnetes Halteelement bereitstellen. Abhängig vom Wischarmtyp sind unterschiedliche Halteelemente vorgesehen, wobei für einen der Wischarmtypen das Halteelement an dem Wischarm angeformt ist. Zu einer Realisierung des Drehlagers sind für manche Wischarmtypen spezielle, als separate Bauteile vorliegende Lagerbolzen vorgesehen. WO-A-2004/026646 offenbart den Oberbegriff des Anspruchs 1.

### Offenbarung der Erfindung

Die Erfindung geht aus von einer Wischblattvorrichtung mit einem fest mit einem Hauptbauteil eines Wischblatts verbindbaren Adapterelement, welches wenigstens zwei einander gegenüberstehende Seitenwände umfasst, die einen Aufnahmebereich für wenigstens einen Teil zumindest eines Halteelements für einen Wischarm wenigstens teilweise begrenzen.

Es wird vorgeschlagen, dass zumindest eine der Seitenwände wenigstens eine als Lageröffnung ausgebildete Ausnehmung für ein Lagerelement aufweist. Nach der Erfindung weisen beide Seitenwände jeweils wenigstens eine als Lageröffnung ausgebildete Ausnehmung für das Lagerelement auf. Vorzugsweise sind diese Ausnehmungen koaxial angeordnet und besonders vorteilhaft auch identisch zueinander ausgebildet. Unter einem "Hauptbauteil eines Wischblatts" soll in diesem Zusammenhang insbesondere ein Bauteil des Wischblatts verstanden werden, dessen Masse zumindest 20 %, insbesondere wenigstens 30 %, vorzugsweise mindestens 40 % und besonders vorteilhaft zumindest 50 % einer Gesamtmasse des Wischblatts ausmacht. Vorzugsweise ist das Hauptbauteil eine Federleiste des Wischblatts. Unter einer "Federleiste" soll in diesem Zusammenhang insbesondere ein Element verstanden werden, das zumindest eine Erstreckung aufweist, die in wenigstens einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige Gegenkraft erzeugt, die der Veränderung entgegenwirkt. Unter einer "Erstreckung" eines Elements soll in diesem Zusammenhang insbesondere ein maximaler Abstand zweier Punkte einer senkrechten Projektion des Elements auf eine Ebene verstanden werden. Vorzugsweise besteht die Federleiste teilweise, vorzugsweise zumindest zu einem Großteil und besonders vorteilhaft vollständig aus Federstahl. Darunter, dass die Federleiste "zumindest zu einem Großteil" aus Federstahl besteht, soll insbesondere verstanden werden, dass die Federleiste mit einem Massenanteil von zumindest 50 %, insbesondere von wenigstens 70 %, vorzugsweise von mindestens 90 % und besonders vorteilhaft von zumindest 95 % aus Federstahl besteht.

Unter einem "Adapterelement" soll in diesem Zusammenhang insbesondere ein Element verstanden werden, welches dazu vorgesehen ist, einen Kopplungsbereich des Wischblatts für eine Kopplung und/oder Kontaktierung mit dem Halteelement bereitzustellen. Unter "vorgesehen" soll insbesondere speziell ausgelegt und/oder ausgestattet verstanden werden. Vorzugsweise ist das Adapterelement einstückig ausgebildet. Unter "einstückig" soll insbesondere zumindest stoffschlüssig verbunden verstanden werden, beispielsweise durch einen Lötprozess, Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, beispielsweise durch eine Herstellung aus einem Guss und/oder durch eine Herstellung in einem Ein- oder Mehrkomponentenspritzverfahren und vorteilhaft aus einem einzelnen Rohling. Darunter, dass das Adapterelement mit dem Hauptbauteil des Wischblatts "fest verbindbar" ist, soll insbesondere verstanden werden, dass das Adapterelement dazu vorgesehen ist, mit dem Hauptbauteil verbunden zu werden und hierfür insbesondere wenigstens eine Befestigungseinheit aufweist, welche in zumindest einem montierten Zustand fest, insbesondere drehfest, mit dem Hauptbauteil verbunden ist, insbesondere mittelbar oder vorzugsweise unmittelbar.

Unter einer "Seitenwand" soll in diesem Zusammenhang insbesondere ein Bauelement verstanden werden, welches eine Längserstreckung aufweist, welche wenigstens 5-mal, insbesondere mindestens 7-mal und vorzugsweise zumindest 9-mal so groß ist wie eine erste Quererstreckung und wenigstens 2-mal, insbesondere mindestens 4-mal und vorzugsweise zumindest 6-mal so groß ist wie eine zweite Quererstreckung. Unter einer "Längserstreckung" des Bauelements soll insbesondere eine parallel zu einer Haupterstreckungsebene angeordnete längste Erstreckung des Bauelements verstanden werden. Unter einer "Quererstreckung" des Bauelements soll insbesondere eine zur Längserstreckung senkrechte Erstreckung verstanden werden. Unter einer "Haupterstreckungsebene" eines Elements, insbesondere einer Seitenwand, soll in diesem Zusammenhang insbesondere eine Ebene verstanden werden, die unter allen Ebenen eine größte Menge an Schnittpunkten mit dem Element aufweist. Sollten mehrere Ebenen eine größte Menge an Schnittpunkten aufweisen, soll insbesondere eine Ebene, die zumindest das Element schneidet und zu allen diesen Ebenen, insbesondere zu Schnittgeraden beliebiger Paare dieser Ebenen, einen geringsten mittleren Abstand aufweist, als Haupterstreckungsebene verstanden werden. Vorzugsweise sind die Seitenwände zumindest weitgehend quaderförmig ausgebildet. Darunter, dass die Seitenwände "zumindest weitgehend quaderförmig" ausgebildet sind, soll insbesondere verstanden werden, dass sich die Seitenwände mit einem Volumenanteil von höchstens 40 %, insbesondere von maximal 30 %, vorzugsweise von höchstens 20 % und besonders vorteilhaft von maximal 10 % von einem Quader unterscheiden. Vorzugsweise bildet wenigstens eine Oberfläche der Seitenwände zumindest einen von dem Hauptbauteil maximal beabstandeten Punkt des Adapterelements. Darunter, dass sich die zwei Seitenwände "gegenüberstehen", soll insbesondere verstanden werden, dass für jede der zwei Seitenwände wenigstens eine Normale einer Haupterstreckungsebene der Seitenwand existiert, welche gleichzeitig beide Seitenwände in jeweils zumindest einem Punkt schneidet. Vorzugsweise sind die Haupterstreckungsebenen der zwei Seitenwände parallel zueinander angeordnet.

Unter einem "Halteelement" für einen Wischarm soll hier und im Folgenden insbesondere ein Element verstanden werden, welches in zumindest einem montierten Zustand das Adapterelement mit dem Wischarm vorzugsweise drehbar verbindet, insbesondere unter Mitwirkung weiterer Bauteile, insbesondere des Lagerelements. Unter einer "Ausnehmung" soll hier und im Folgenden insbesondere eine Materialausnehmung in einem Bauteil verstanden werden, welche sich insbesondere von einer ersten Oberfläche des Bauteils zu einer vorzugsweise gegenüberliegenden zweiten Oberfläche des Bauteils erstreckt. Die Ausnehmung kann insbesondere als eine Randausnehmung ausgebildet sein. Vorzugsweise ist die Ausnehmung jedoch als eine Innenausnehmung ausgebildet. Unter einer "Innenausnehmung" soll insbesondere eine Ausnehmung verstanden werden, welche bei einem gedachten Einführen eines unendlich langen Stabs beliebiger Dicke entlang einer Einführrichtung ein Entfernen des Stabs durch eine Bewegung des Stabs senkrecht zur Einführrichtung unmöglich macht.

Unter einem "Lagerelement" soll in diesem Zusammenhang insbesondere ein Element verstanden werden, welches in wenigstens einem montierten Zustand Teil eines Lagers zu einem Führen gegeneinander beweglicher Bauelemente, insbesondere des Halteelements und/oder des Wischarms relativ zum Adapterelement, ist. Unter einer "Lageröffnung" soll insbesondere ein Lagerelement verstanden werden, welches als eine Ausnehmung, vorzugsweise als eine Innenausnehmung, ausgebildet ist. Die Lageröffnung ist in wenigstens einem montierten Zustand insbesondere zu einer Aufnahme eines Lagerelements, insbesondere eines Lagerbolzens, vorgesehen. Unter einem "Lagerbolzen" soll in diesem Zusammenhang insbesondere ein Bauelement verstanden werden, welches zumindest eine Längserstreckung aufweist, die zumindest 3-mal, insbesondere wenigstens 5-mal, vorzugsweise mindestens 7-mal und besonders vorteilhaft zumindest 9-mal so groß ist wie eine zur Längserstreckung senkrechte maximale Quererstreckung des Bauelements. Vorzugsweise ist der Lagerbolzen zumindest teilweise stabförmig, wobei eine Querschnittsfläche des Lagerbolzens von einem Kreis abweichen kann. Besonders vorteilhaft ist der Lagerbolzen zumindest teilweise und vorzugsweise zu wenigstens einem Großteil zylindrisch ausgebildet. Darunter, dass der Lagerbolzen "zu wenigstens einem Großteil zylindrisch" ausgebildet ist, soll insbesondere verstanden werden, dass sich der Lagerbolzen mit einem Volumenanteil von höchstens 20 %, insbesondere von maximal 15 %, vorzugsweise von höchstens 10 % und besonders vorteilhaft von maximal 5 % von einem Zylinder unterscheidet.

Durch eine solche Ausgestaltung kann ein Adapterelement einer Wischblattvorrichtung bereitgestellt werden, welches eine Kontaktierung mit einer Mehrzahl unterschiedlicher gebräuchlicher Wischarme gestattet. Eine Teilevielfalt kann vorteilhaft reduziert werden, wodurch ein Herstellungsaufwand und damit einhergehend auch Kosten gesenkt werden können. Ferner kann eine vorteilhaft einfache Konstruktion erreicht werden, welche dennoch eine hohe Flexibilität erlauben kann. Des Weiteren kann eine vorteilhaft einfache Montage des Wischblatts am Wischarm erreicht werden.

Nach der Erfindung wird vorgeschlagen, dass das Adapterelement wenigstens eine weitere Seitenwand umfasst, welche eine den Seitenwänden zugewandte Seitenfläche aufweist. Unter einer "Seitenfläche" soll insbesondere eine vorzugsweise glatte Oberfläche der Seitenwand verstanden werden, welche insbesondere von Kanten, insbesondere auch von leicht abgerundeten Kanten, der Seitenwand begrenzt ist. Hierbei soll unter einer "Kante" insbesondere ein Oberflächenbereich verstanden werden, welcher einen Krümmungsradius von höchstens 3 mm, insbesondere von maximal 2 mm, vorzugsweise von höchstens 1 mm und besonders vorteilhaft von maximal 0,5 mm aufweist. Vorzugsweise begrenzt die weitere Seitenwand den Aufnahmebereich ebenfalls zumindest teilweise. Hierdurch kann eine vorteilhaft stabile Konstruktion erreicht werden. Ferner kann eine weitere Führungsfläche bereitgestellt werden.

Vorteilhaft verbindet die weitere Seitenwand die Seitenwände. Darunter, dass die weitere Seitenwand die Seitenwände "verbindet", soll insbesondere verstanden werden, dass die weitere Seitenwand die beiden anderen Seitenwände in zumindest einem montierten Zustand jeweils wenigstens teilweise berührt. Hierdurch kann eine kompakte Bauweise erreicht werden. Insbesondere kann ein vorteilhaft abgeschlossener Aufnahmebereich bereitgestellt werden.

Ferner wird vorgeschlagen, dass die Seitenfläche zumindest im Wesentlichen senkrecht zu einer Haupterstreckungsebene wenigstens einer der Seitenwände angeordnet ist. Vorzugsweise ist die Seitenfläche zumindest im Wesentlichen senkrecht zu den Haupterstreckungsebenen der zwei einander gegenüberstehenden Seitenwände angeordnet. Darunter, dass die Seitenfläche "zumindest im Wesentlichen senkrecht zu einer Haupterstreckungsebene" einer der Seitenwände angeordnet ist, soll insbesondere verstanden werden, dass ein Winkel zwischen einer Normalen der Haupterstreckungsebene und jeder beliebigen Normalen einer Teilfläche der Seitenfläche, welche einen Flächeninhalt von zumindest 80 %, insbesondere von mindestens 90 % und vorzugsweise von wenigstens 95 % eines Flächeninhalts der Seitenfläche aufweist, um höchstens 10°, insbesondere um maximal 5°, vorzugsweise um höchstens 2° und besonders vorteilhaft um maximal 1° von einem rechten Winkel abweicht. Hierdurch kann ein vorteilhafter Aufnahmebereich definiert werden.

Nach der Erfindung wird vorgeschlagen, dass die Seitenfläche in wenigstens eine Richtung zumindest eine Hauptkrümmung aufweist. Unter einer "Hauptkrümmung" der Seitenfläche soll in diesem Zusammenhang insbesondere eine großflächige Krümmung, insbesondere in einem von einem Rand der Seitenfläche zumindest wesentlich beabstandeten Bereich verstanden werden. Unter einer "großflächigen Krümmung" soll insbesondere eine Krümmung in einem Flächenbereich verstanden werden, welcher wenigstens 20 %, insbesondere mindestens 30 %, vorzugsweise zumindest 40 % und besonders vorteilhaft wenigstens 50 % einer Gesamtfläche der Seitenfläche entspricht. Unter einem "von einem Rand der Seitenfläche zumindest wesentlich beabstandeten Bereich" soll insbesondere ein Bereich verstanden werden, der vom Rand einen Abstand von wenigstens 5 %, insbesondere von zumindest 10 %, vorzugsweise von mindestens 15 % und besonders vorteilhaft von wenigstens 20 % einer maximalen Erstreckung der Seitenfläche in einem gedachten abgewickelten Zustand aufweist. Hierdurch kann eine vorteilhafte Führung für den Wischarm ermöglicht werden.

In einer besonders bevorzugten Ausgestaltung der Erfindung wird vorgeschlagen, dass die Hauptkrümmung von einem Schwerpunkt des Adapterelements aus betrachtet konkav ist. Hierdurch kann eine besonders vorteilhafte Führung für den Wischarm ermöglicht werden.

Wenn die Seitenfläche derart ausgestaltet ist, dass wenigstens eine Oberfläche des Wischarms und/oder zumindest eine Oberfläche des Halteelements in wenigstens einem montierten Zustand zumindest teilweise an der Seitenfläche anliegt, kann vorteilhaft ein wackelfreies Wischblatt bereitgestellt werden. Nach der Erfindung ist die Seitenfläche derart ausgestaltet, dass stets, insbesondere unabhängig von einer Drehlage des Wischarms und/oder des Halteelements relativ zum Adapterelement, wenigstens eine Oberfläche des Wischarms und/oder zumindest eine Oberfläche des Halteelements im montierten Zustand zumindest teilweise an der Seitenfläche anliegt.

Ferner wird vorgeschlagen, dass die Seitenfläche wenigstens abschnittsweise zumindest im Wesentlichen eine Form eines Teils eines Zylindermantels aufweist. Darunter, dass die Seitenfläche "wenigstens abschnittsweise zumindest im Wesentlichen eine Form eines Teils eines Zylindermantels aufweist", soll insbesondere verstanden werden, dass sich die Seitenfläche in einem Teilabschnitt mit einem Oberflächenanteil von höchstens 15 %, insbesondere von maximal 10 %, vorzugsweise von höchstens 5 % und besonders vorteilhaft von maximal 1 % von einem Teil eines Zylindermantels unterscheidet. Hierdurch kann vorteilhaft ein Lager für den Wischarm und/oder das Halteelement bereitgestellt werden.

In einer bevorzugten Ausgestaltung der Erfindung wird vorgeschlagen, dass das Lagerelement zumindest teilweise von einem Lagerbolzen gebildet ist. Hierdurch kann vorteilhaft eine Drehlagerung der Halteeinheit an dem Adapterelement bereitgestellt werden.

In einer weiteren Ausgestaltung der Erfindung wird vorgeschlagen, dass das Halteelement einstückig mit dem Lagerelement ausgebildet ist. Hierdurch kann eine vorteilhaft einfache Konstruktion erreicht werden. Ferner können verschiedene Arten von Wischarmen an dem Adapterelement montiert werden.

Vorteilhaft ist das Lagerelement als separates Bauteil ausgebildet. Darunter, dass das Lagerelement "als separates Bauteil ausgebildet ist", soll insbesondere verstanden werden, dass das Lagerelement insbesondere zerstörungsfrei vollständig demontierbar ist, so dass das Lagerelement nach einer Demontage einzeln als separates Bauteil vorliegt. Hierdurch kann vorteilhaft ein hohes Maß an Flexibilität bei einer Montage ermöglicht werden. Ferner können verschiedene Arten von Wischarmen an dem Adapterelement montiert werden.

Ferner wird vorgeschlagen, dass das Halteelement unverlierbar mit dem Wischarm verbunden ist. Darunter, dass das Halteelement "unverlierbar mit dem Wischarm verbunden ist", soll insbesondere verstanden werden, dass das Halteelement in zumindest einem vormontierten Zustand, insbesondere vor einer Montage des Halteelements am Adapterelement, am Wischarm befestigt ist, insbesondere werkzeuglos unlösbar. Vorzugsweise ist das Halteelement mit dem Wischarm verrastet und/oder an dem Wischarm angeschraubt und/oder angenietet und/oder besonders vorteilhaft einstückig mit dem Wischarm verbunden, insbesondere an dem Wischarm angeformt. Hierdurch kann eine vorteilhaft einfache Konstruktion erreicht werden. Ferner können verschiedene Arten von Wischarmen an dem Adapterelement montiert werden.

In einer alternativen Ausgestaltung der Erfindung wird vorgeschlagen, dass das Halteelement als separates Bauteil mit dem Wischarm verbindbar ist. Darunter, dass das Halteelement "als separates Bauteil mit dem Wischarm verbindbar ist", soll insbesondere verstanden werden, dass der Wischarm und das Halteelement vor einer Montage als separate Bauteile vorliegen, um bei der Montage miteinander verbunden zu werden, insbesondere unter zusätzlicher Mitwirkung weiterer Bauteile, insbesondere des Lagerelements. Hierdurch kann vorteilhaft ein hohes Maß an Flexibilität bei einer Montage ermöglicht werden. Ferner können verschiedene Arten von Wischarmen an dem Adapterelement montiert werden.

Wenn das Halteelement wenigstens eine Ausnehmung zu einer Aufnahme des Lagerelements aufweist, kann vorteilhaft eine Drehlagerung des Halteelements am Adapterelement bereitgestellt werden. Vorzugsweise ist die Ausnehmung des Halteelements als eine Innenausnehmung ausgebildet, welche in wenigstens einem montierten Zustand insbesondere koaxial zu der Ausnehmung der Seitenwand des Adapterelements angeordnet ist. Vorzugsweise sind die Ausnehmung des Halteelements und die Ausnehmung der Seitenwand von einem Querschnitt her identisch zueinander ausgebildet.

Vorteilhaft ist das Halteelement dazu vorgesehen, den Wischarm zumindest formschlüssig an dem Adapterelement drehbar zu befestigen, insbesondere in einem Zusammenwirken mit einem weiteren Bauteil, vorzugsweise dem Lagerelement. Hierdurch kann eine vorteilhaft Drehlagerung des Wischarms am Adapterelement erreicht werden.

In einer Ausgestaltung der Erfindung wird vorgeschlagen, dass das Halteelement ein Rastelement zu einer Verbindung mit dem Wischarm aufweist. Unter einem "Rastelement" soll in diesem Zusammenhang insbesondere ein Element verstanden werden, welches dazu vorgesehen ist, in einem Zusammenwirken mit einem weiteren Rastelement eine Rastverbindung herzustellen. Vorzugsweise ist das Rastelement als eine Rastnase ausgebildet, welche insbesondere einen Teilbereich aufweist, der bei einem Rastvorgang in eine zum Wischarm senkrechte Richtung bewegt wird und/oder eine Erstreckung in eine Richtung senkrecht zum Wischarm verändert. In diesem Fall weist der Wischarm vorzugsweise ein als Ausnehmung ausgebildetes Rastelement auf. Hierdurch kann eine vorteilhaft einfache Verbindung zwischen dem Wischarm und dem Halteelement bereitgestellt werden, welche insbesondere werkzeuglos lösbar ist.

Ferner wird vorgeschlagen, dass das Halteelement wenigstens eine Außenfläche aufweist, welche zumindest abschnittsweise an eine Oberfläche des Wischarms angepasst ist. Unter einer "Außenfläche" des Halteelements soll insbesondere eine vorzugsweise glatte Oberfläche des Halteelements verstanden werden, welche insbesondere von Kanten, insbesondere auch von leicht abgerundeten Kanten, des Halteelements begrenzt ist. Darunter, dass die Außenfläche "zumindest abschnittsweise an eine Oberfläche des Wischarms angepasst ist", soll insbesondere verstanden werden, dass die Außenfläche derart beschaffen ist, dass sie in wenigstens einem montierten Zustand mit einem Oberflächenanteil von wenigstens 50 %, insbesondere von mindestens 60 %, vorzugsweise von wenigstens 70 % und besonders vorteilhaft von zumindest 80 % an der Oberfläche des Wischarms anliegt. Hierdurch kann vorteilhaft ein wackelfreies Wischblatt bereitgestellt werden

Vorteilhaft weist die Außenfläche in zumindest eine Richtung wenigstens eine Hauptkrümmung auf. Unter einer "Hauptkrümmung" der Außenfläche soll in diesem Zusammenhang insbesondere eine großflächige Krümmung, insbesondere in einem von einem Rand der Außenfläche zumindest wesentlich beabstandeten Bereich, verstanden werden. Unter einer "großflächigen Krümmung" soll insbesondere eine Krümmung in einem Flächenbereich verstanden werden, welcher wenigstens 20 %, insbesondere mindestens 30 %, vorzugsweise zumindest 40 % und besonders vorteilhaft wenigstens 50 % einer Gesamtfläche der Außenfläche entspricht. Unter einem "von einem Rand der Außenfläche zumindest wesentlich beabstandeten Bereich" soll insbesondere ein Bereich verstanden werden, der vom Rand einen Abstand von wenigstens 5 %, insbesondere von zumindest 10 %, vorzugsweise von mindestens 15 % und besonders vorteilhaft von wenigstens 20 % einer maximalen Erstreckung der Außenfläche in einem gedachten abgewickelten Zustand aufweist. Hierdurch kann eine Anpassung an eine Krümmung eines gebräuchlichen Wischarms, insbesondere eines Hakenwischarms, erreicht werden.

In einer Ausgestaltung der Erfindung wird vorgeschlagen, dass der Wischarm in wenigstens einem montierten Zustand zwischen dem Halteelement und dem Adapterelement zumindest formschlüssig gehalten ist. Insbesondere ist in diesem Fall das Halteelement mittels des Lagerelements an dem Adapterelement befestigt. Darunter, dass der Wischarm in wenigstens einem montierten Zustand "zwischen dem Halteelement und dem Adapterelement zumindest formschlüssig gehalten ist", soll insbesondere verstanden werden, dass in dem montierten Zustand der Wischarm in wenigstens einem Zwischenraum zwischen dem Halteelement und dem Adapterelement angeordnet ist und insbesondere im Zwischenraum zumindest durch einen Formschluss, vorzugsweise durch einen Hintergriff des Wischarms, insbesondere hinter wenigstens einem Teil des Halteelements, gehalten ist. Hierdurch kann eine vorteilhafte drehbare Befestigung des Wischarms am Adapterelement erreicht werden.

In einer bevorzugten Ausgestaltung der Erfindung wird vorgeschlagen, dass der Aufnahmebereich an einer dem Hauptbauteil abgewandten Seite zumindest teilweise offen ausgebildet ist. Darunter, dass der Aufnahmebereich an einer Seite "zumindest teilweise offen ausgebildet ist", soll insbesondere verstanden werden, dass wenigstens ein von zumindest einem Punkt des Aufnahmebereichs ausgehender und in Richtung der Seite gerichteter Strahl existiert, welcher frei von Schnittpunkten mit einer Oberfläche des Adapterelements ist. Hierdurch kann eine einfache Montage ermöglicht werden. Ferner kann Material eingespart werden.

In einer besonders bevorzugten Ausgestaltung der Erfindung wird vorgeschlagen, dass der Aufnahmebereich an einer der weiteren Seitenwand gegenüberliegenden Seite zumindest teilweise offen ausgebildet ist. Hierdurch kann eine vorteilhafte Führung des Wischarms im Adapterelement erzielt werden.

Wenn das Adapterelement wenigstens eine Befestigungseinheit aufweist, welche zu einer unmittelbaren und festen Verbindung mit einer Federleiste des Wischblatts vorgesehen ist, kann eine vorteilhaft einfache Konstruktion erreicht werden. Bei der Befestigungseinheit kann es sich um eine beliebige, dem Fachmann als sinnvoll erscheinende Befestigungseinheit handeln, vorzugsweise jedoch um eine Rasteinheit, welche wenigstens ein Rastelement zu einer Herstellung einer Rastverbindung mit der Federleiste aufweist. Unter einer "unmittelbaren und festen Verbindung" der Befestigungseinheit mit der Federleiste soll insbesondere eine Verbindung verstanden werden, bei der die Befestigungseinheit unmittelbar an einer Kontaktstelle der Federleiste mit der Federleiste kontaktiert ist und eine Translation sowie eine Rotation der Befestigungseinheit relativ zur Kontaktstelle unterbunden ist.

Ferner werden ein Wischblatt mit einer erfindungsgemäßen Wischblattvorrichtung, eine Wischvorrichtung mit einem Wischarm und dem Wischblatt vorgeschlagen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: drei Wischvorrichtungen in einem demontierten Zustand, jeweils mit unterschiedlichen Wischarmen und mit den Wischarmen verbindbaren Wischblättern, wobei Wischblattvorrichtungen der Wischblätter jeweils ein gemeinsames identisches Adapterelement aufweisen,
- Fig. 2: einen Teil der ersten Wischvorrichtung in einem montierten Zustand in einer senkrechten Schnittdarstellung,
- Fig. 3: einen Teil der zweiten Wischvorrichtung in einem montierten Zustand in einer senkrechten Schnittdarstellung,
- Fig. 4: einen Teil der dritten Wischvorrichtung während eines Montageschritts in einer isometrischen Darstellung und
- Fig. 5: den Teil der dritten Wischblattvorrichtung in einem montierten Zustand in einer isometrischen Darstellung.

### Beschreibung der Ausführungsbeispiele

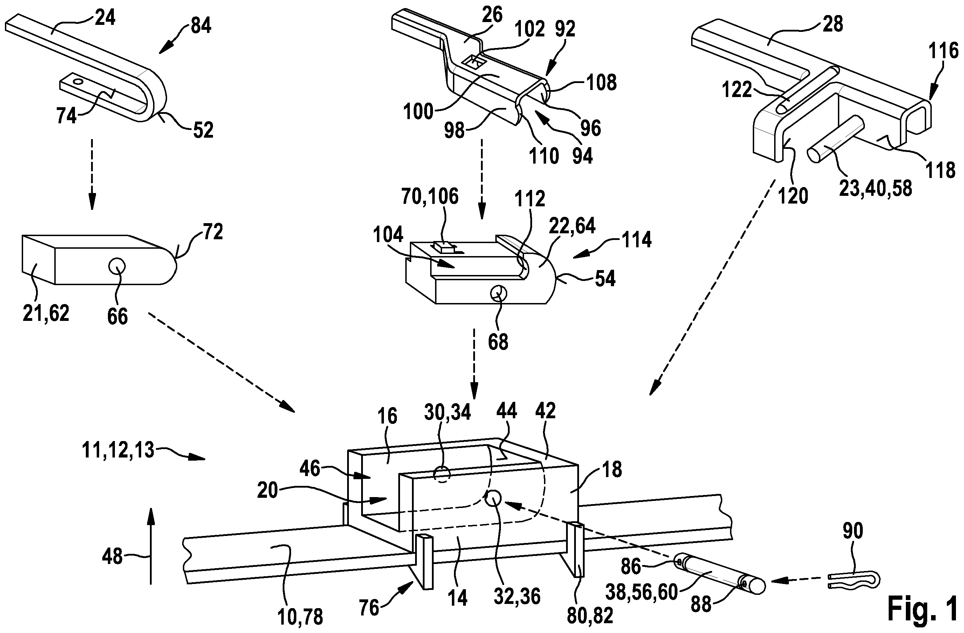

Figur 1 zeigt eine Zusammenstellung dreier Wischvorrichtungen in einem demontierten Zustand. Eine erste Wischvorrichtung umfasst einen Wischarm 24 und ein Wischblatt 11. Eine zweite Wischvorrichtung weist einen Wischarm 26 und ein Wischblatt 12 auf. Eine dritte Wischvorrichtung umfasst einen Wischarm 28 und ein Wischblatt 13. Die drei Wischarme 24, 26, 28 unterscheiden sich grundlegend voneinander. Die drei Wischarme 24, 26, 28 stellen ferner Typen weit verbreiteter und gebräuchlicher Wischarme dar. Jedes der Wischblätter 11, 12, 13 umfasst jeweils eine Wischblattvorrichtung. Den drei Wischblattvorrichtungen ist ein Adapterelement 14 und ein als Federleiste 78 ausgebildetes Hauptbauteil 10 gemein. Dies bedeutet, dass grundlegend verschiedene Typen von Wischarmen 24, 26, 28 an ein und demselben Adapterelement 14 montierbar sind. Hierfür sind lediglich spezielle Halteelemente 21, 22, 23 erforderlich. Die Wischblattvorrichtung des Wischblatts 11 umfasst das Halteelement 21. Die Wischblattvorrichtung des Wischblatts 12 weist das Halteelement 22 auf. Die Wischblattvorrichtung des Wischblatts 13 umfasst kein separates Halteelement. Das Halteelement 23 der Wischblattvorrichtung des Wischblatts 13 ist einstückig mit dem Wischarm 28 ausgebildet. Die Wischblätter 11, 12, 13 umfassen ferner jeweils eine in den Figuren nicht dargestellte Wischleiste und wenigstens ein Spoilerelement.

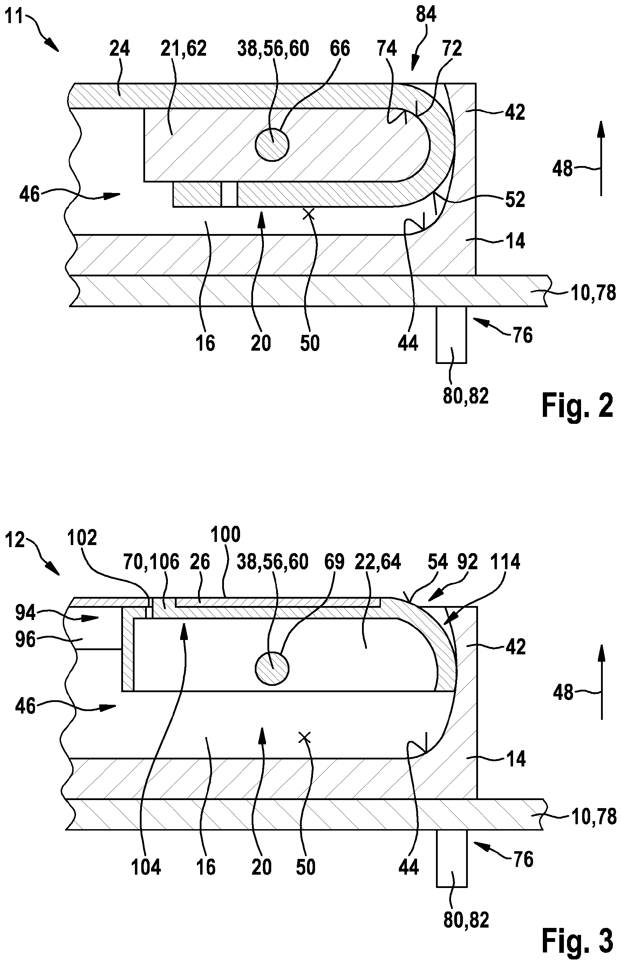

Das Adapterelement 14 ist einstückig ausgebildet. Das Adapterelement 14 besteht aus einem Kunststoff. Das Adapterelement 14 ist im Wesentlichen als ein Hohlquader ausgebildet, dessen von dem Hauptbauteil 10 abgewandte Oberseite und eine kleinste Seite offen ausgebildet sind. Zwei einander gegenüberstehende und zur Oberseite benachbarte Seitenwände 16, 18 des Adapterelements 14 begrenzen einen Aufnahmebereich 20 für wenigstens einen Teil der Halteelemente 21, 22, 23. Die Seitenwände 16, 18 des Adapterelements 14 weisen jeweils eine als Lageröffnung 30, 32 ausgebildete Ausnehmung 34, 36 für ein Lagerelement 38, 40 auf. Das Adapterelement 14 umfasst wenigstens eine weitere Seitenwand 42, welche eine den Seitenwänden 16, 18 zugewandte Seitenfläche 44 aufweist. Die weitere Seitenwand 42 verbindet die Seitenwände 16, 18. Die Seitenfläche 44 ist zumindest im Wesentlichen senkrecht zu einer Haupterstreckungsebene 46 der Seitenwände 16, 18 angeordnet. Die Seitenfläche 44 weist in eine zur Oberseite senkrechte Richtung 48 zumindest eine Hauptkrümmung auf. Die Hauptkrümmung ist von einem Schwerpunkt 50 des Adapterelements 14 aus betrachtet konkav. Die Seitenfläche 44 weist wenigstens abschnittsweise zumindest im Wesentlichen eine Form eines Teils eines Zylindermantels auf (vgl. auch Figuren 2 und 3).

Das Adapterelement 14 ist fest mit dem Hauptbauteil 10 verbindbar. Hierzu umfasst das Adapterelement 14 wenigstens eine Befestigungseinheit 76, welche zu einer unmittelbaren und festen Verbindung mit der Federleiste 78 vorgesehen ist.

Die Befestigungseinheit 76 ist an einer der Oberseite gegenüberliegenden Unterseite des Adapterelements 14 angeordnet. Die Befestigungseinheit 76 weist Befestigungselemente 80 auf, von denen in den Figuren lediglich eines bezeichnet ist. Die Befestigungselemente 80 sind jeweils in einem Eckbereich des Adapterelements 14 angeordnet. Die Befestigungseinheit 76 weist vier Befestigungselemente 80 auf. Die Befestigungselemente 80 sind als Rasthaken 82 ausgebildet, welche die Federleiste 78 in einem montierten Zustand zumindest teilweise umgreifen und das Adapterelement 14 in einem Hintergriff an der Federleiste 78 befestigen. In einer alternativen Ausgestaltung ist auch jede beliebige andere, dem Fachmann als sinnvoll erscheinende Befestigungseinheit denkbar. Insbesondere kann ein Adapterelement auch stoffschlüssig, insbesondere durch eine Schweißung, an einem Hauptbauteil befestigt sein.

Der Wischarm 24 ist an seinem in einem montierten Zustand dem Wischblatt 11 zugewandten Ende 84 U-förmig umgebogen, so dass am Ende 84 ein Haken gebildet ist. Zu einer Montage des Wischarms 24 am Adapterelement 14 ist das Halteelement 21 erforderlich. Das Halteelement 21 ist dazu vorgesehen, den Wischarm 24 formschlüssig am Adapterelement 14 drehbar zu befestigen. Das Halteelement 21 ist als separates Bauteil 62 ausgebildet. Das Halteelement 21 besteht aus einem Kunststoff. Das Halteelement 21 ist im Wesentlichen quaderförmig ausgebildet, wobei eine kleinste Oberfläche des Quaders zylindermantelförmig nach außen gewölbt ist. Das Halteelement 21 ist derart ausgestaltet, dass es exakt und weitgehend wackelfrei in das U-förmige Ende 84 des Wischarms 24 einführbar ist (vgl. Figur 2). Im montierten Zustand ist das Halteelement 21 demnach von dem Wischarm 24 umgriffen. Das Halteelement 21 umfasst wenigstens eine Außenfläche 72, welche zumindest abschnittsweise an eine Oberfläche 74 des Wischarms 24 angepasst ist und im montierten Zustand unmittelbar an dieser anliegt. Die Außenfläche 72 weist bei einer Betrachtung im montierten Zustand in die Richtung 48 eine Hauptkrümmung auf. Ferner umfasst das Halteelement 21 eine Ausnehmung 66 für das Lagerelement 38. Die Ausnehmung 66 durchdringt das Halteelement 21 vollständig. Die Ausnehmung 66 ist parallel zur zylindermantelförmig gewölbten Oberfläche angeordnet.

Das Lagerelement 38 ist zumindest teilweise von einem Lagerbolzen 56 gebildet. Das Lagerelement 38 ist als separates Bauteil 60 ausgebildet. Das Lagerelement 38 ist zumindest im Wesentlichen zylinderförmig ausgebildet. Das Lagerelement 38 besteht aus einem Metall, vorzugsweise aus Edelstahl. Im montierten Zustand ist das Lagerelement 38 durch die Ausnehmungen 34, 36 der Seitenwände 16, 18 des Adapterelements 14 und durch die Ausnehmung 66 des Halteelements 21 gesteckt. Das Lagerelement 38 weist an seinen beiden Enden jeweils eine Ausnehmung 86, 88 auf, welche senkrecht zu einer Längserstreckung des Lagerelements 38 angeordnet ist. Das Lagerelement 38 ist im montierten Zustand durch Federbügel 90 gesichert, wobei jeweils ein Federbügel 90 in jeweils einer der Ausnehmungen 86, 88 steckt. Alternativ kann an einem Ende eines Lagerelements eine Verdickung vorgesehen werden, welche ein Hindurchrutschen des Lagerelements durch die Ausnehmung 34, 36 verhindert.

Figur 2 zeigt einen senkrechten Schnitt durch die erste Wischvorrichtung im montierten Zustand. Der Wischarm 24 ist zwischen dem Halteelement 21 und dem Adapterelement 14 formschlüssig gehalten. Die Seitenfläche 44 ist hierfür derart ausgestaltet, dass wenigstens eine Oberfläche 52 des Wischarms 24 im montierten Zustand zumindest teilweise an der Seitenfläche 44 anliegt, und zwar insbesondere unabhängig von einer Drehlage des Wischarms 24 relativ zum Adapterelement 14.

Der Wischarm 26 weist an seinem in einem montierten Zustand dem Wischblatt 12 zugewandten Ende 92 einen in Richtung des Wischblatts 12 offenen Aufnahmebereich 94 auf, welcher von zwei zueinander parallelen Wänden 96, 98 und auf einer dem Wischblatt 12 abgewandten Seite von einer Deckfläche 100 begrenzt ist (vgl. Figur 1). Der Wischarm 26 weist in der Deckfläche 100 eine Rastausnehmung 102 auf. Zu einer Montage des Wischarms 26 am Adapterelement 14 ist das Halteelement 22 erforderlich. Das Halteelement 22 ist dazu vorgesehen, den Wischarm 26 formschlüssig am Adapterelement 14 drehbar zu befestigen. Das Halteelement 22 ist als separates Bauteil 64 ausgebildet. Das Halteelement 22 besteht aus einem Kunststoff. Das Halteelement 22 ist als eine im montierten Zustand auf einer dem Hauptbauteil 10 zugewandten Seite offene Hülse ausgebildet (vgl. auch Figur 3). Das Halteelement 22 weist einen Anlagebereich 104 für den Wischarm 26 auf. Der Anlagebereich 104 passt exakt in den Aufnahmebereich 94 des Wischarms 26. Im Anlagebereich 104 weist das Halteelement 22 ein Rastelement 70 auf. Das Rastelement 70 ist als ein Rasthaken 106 ausgebildet, welcher dazu vorgesehen ist, mit der Rastausnehmung 102 des Wischarms 26 eine Rastverbindung einzugehen (vgl. auch Figur 3). Der Anlagebereich 104 umfasst beidseitig je eine zu Ausformungen 108, 110 an den Wänden 96, 98 korrespondierende Aufnahme 112, wobei in Figur 1 lediglich eine Aufnahme 112 sichtbar ist, wodurch im montierten Zustand in einem Zusammenwirken mit der Rastverbindung zwischen dem Rasthaken 106 und der Rastausnehmung 102 ein sicherer Formschluss zwischen dem Wischarm 26 und dem Halteelement 22 hergestellt ist.

An den Anlagebereich 104 anschließend weist das Halteelement 22 einen Lagerbereich 114 auf, welcher im montierten Zustand zumindest teilweise mit der Seitenfläche 44 kontaktiert ist (vgl. Figur 3). Der Lagerbereich 114 weist eine Oberfläche 54 auf, welche zumindest teilweise zylindermantelförmig ausgebildet ist. Ferner umfasst das Halteelement 22 zwei identische, koaxial angeordnete Ausnehmungen 68, 69 für das Lagerelement 38, von denen in Figur 1 lediglich eine sichtbar ist. Die Ausnehmungen 68, 69 durchdringen das Halteelement 22 vollständig. Analog zum letzten Ausführungsbeispiel ist im montierten Zustand das Lagerelement 38 durch die Ausnehmungen 34, 36 der Seitenwände 16, 18 des Adapterelements 14 und die Ausnehmungen 68, 69 des Halteelements 22 gesteckt. Eine Sicherung des Lagerelements 38 erfolgt in der bereits beschriebenen Weise.

Figur 3 zeigt einen senkrechten Schnitt durch die zweite Wischvorrichtung im montierten Zustand. Die Seitenfläche 44 ist derart ausgestaltet, dass die Oberfläche 54 des Halteelements 22 zumindest teilweise an der Seitenfläche 44 anliegt, und zwar insbesondere unabhängig von einer Drehlage des Wischarms 26 relativ zum Adapterelement 14.

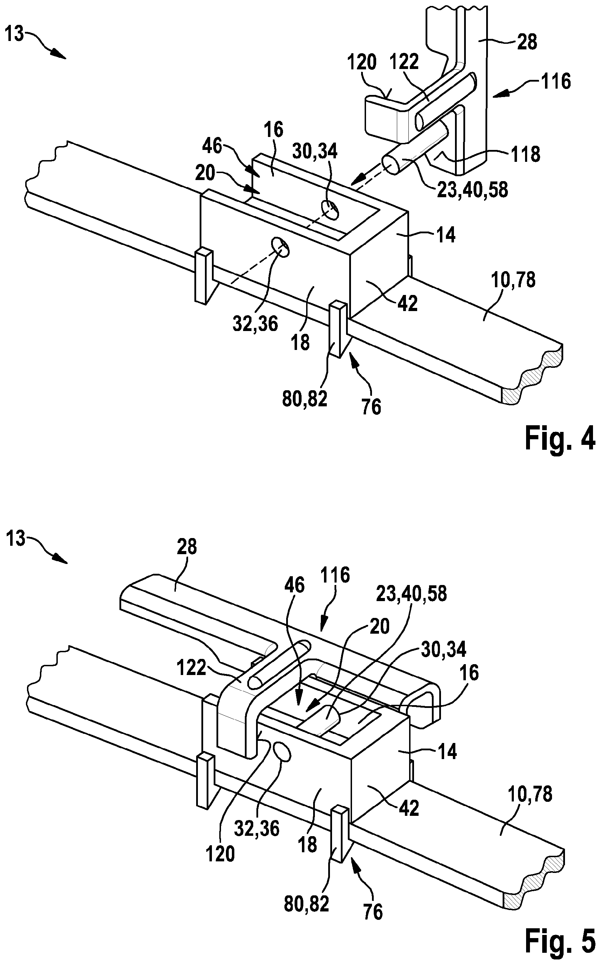

An einem in einem montierten Zustand dem Wischblatt 13 zugewandten Ende 116 des Wischarms 28 ist das Halteelement 23 angeformt und damit unverlierbar mit dem Wischarm 28 verbunden (vgl. Figur 1). Das Halteelement 23 ist dabei einstückig mit dem Lagerelement 40 ausgebildet. Das Lagerelement 40 ist zumindest teilweise von einem Lagerbolzen 58 gebildet. Das Lagerelement 40 ist zunächst im Wesentlichen zylinderförmig ausgebildet. Der Wischarm 28 umfasst an seinem Ende 116 zwei einander gegenüberstehende Anschlagflächen 118, 120. Die Anschlagflächen 118, 120 sind an dem Wischarm 28 angeformt. An der Anschlagfläche 118 ist das Halteelement 23 angeformt. Eine Längserstreckungsrichtung des Halteelements 23 ist senkrecht zur Anschlagfläche 118 angeordnet. Die Anschlagflächen 118, 120 sind im Wesentlichen parallel zueinander angeordnet. Ein gegenseitiger Abstand der Anschlagflächen 118, 120 ist etwas größer als eine Breite des Adapterelements 14, so dass dieses zwischen beide passt (vgl. Figur 5). Die Anschlagfläche 120 ist an einem Übergriffselement 122 angeordnet, welches am Wischarm 28 angeformt ist. Eine Haupterstreckungsebene des Übergriffselements 122 ist im Wesentlichen senkrecht zu den Anschlagflächen 118, 120 und parallel zur Längserstreckungsrichtung des Halteelements 23 angeordnet.

Das Halteelement 23 ist dazu vorgesehen, den Wischarm 28 formschlüssig am Adapterelement 14 drehbar zu befestigen. Im montierten Zustand ist das Adapterelement 14 formschlüssig zwischen den Anschlagflächen 118, 120 gehalten. Das Halteelement 23 ist in den Ausnehmungen 34, 36 der Seitenwände 16, 18 des Adapterelements 14 drehbar gelagert. Durch die Anschlagflächen 118, 120 ergibt sich eine Fixierung des Wischarms 28 am Adapterelement 14 in einer Richtung parallel zur Längserstreckungsrichtung des Halteelements 23. Durch eine Lagerung des Halteelements 23 in den Ausnehmungen 34, 36 ergibt sich eine Fixierung des Wischarms 28 am Adapterelement 14 in einer Richtung senkrecht zur Längserstreckungsrichtung des Halteelements 23. Im montierten Zustand überspannt das Übergriffselement 122 die offene Oberseite des Adapterelements 14. Der Wischarm 28 ist in gewissen Grenzen relativ zum Adapterelement 14 drehbar, ohne dass ein Formschluss zwischen dem Wischarm 28 und dem Adapterelement 14 aufgehoben ist. Verglichen mit den vorhergehenden Ausführungsbeispielen ergibt sich eine deutlich geringere Anzahl von Einzelteilen.

## Patentansprüche

1. Wischblattvorrichtung mit einem fest mit einem Hauptbauteil (10) eines Wischblatts (11; 12; 13) verbindbaren Adapterelement (14), einem Halteelement (21, 22) für einen Wischarm (24, 26) und einem Lagerelement (38), wobei das Adapterelement (14) wenigstens zwei einander gegenüberstehende Seitenwände (16, 18) umfasst, die einen Aufnahmebereich (20) für wenigstens einen Teil zumindest des Halteelements (21; 22) wenigstens teilweise begrenzen, wobei zumindest eine der Seitenwände (16, 18) wenigstens eine als Lageröffnung (30, 32) ausgebildete Ausnehmung (34, 36) für das Lagerelement (38) aufweist, wobei das Adapterelement (14) wenigstens eine weitere Seitenwand (42) umfasst, welche eine den Seitenwänden (16, 18) zugewandte Seitenfläche (44) aufweist, wobei die Seitenfläche (44) in wenigstens eine Richtung (48) zumindest eine Hauptkrümmung aufweist, wobei die Seitenfläche (44) derart ausgestaltet ist, dass wenigstens eine Oberfläche (52) des Wischarms (24) und/oder zumindest eine Oberfläche (54) des Halteelements (22) in wenigstens einem montierten Zustand zumindest teilweise an der Seitenfläche (44) anliegt, **dadurch gekennzeichnet, dass** die Seitenfläche (44) derart ausgestaltet ist, dass, stets, unabhängig von einer Drehlage des Wischarms (24) und/oder des Halteelements (22) relativ zum Adapterelement (14), wenigstens eine Oberfläche (52) des Wischarms (24) und/oder eine Oberfläche (54) des Halteelements (22) im montierten Zustand zumindest teilweise an der Seitenfläche (44) anliegt.

2. Wischblattvorrichtung nach Anspruch 1, **dadurch gekennzeichnet, dass** die weitere Seitenwand (42) die Seitenwände (16, 18) verbindet.

3. Wischblattvorrichtung nach Anspruch 1 oder 2, **dadurch gekennzeichnet, dass** die Seitenfläche (44) zumindest im Wesentlichen senkrecht zu einer Haupterstreckungsebene (46) wenigstens einer der Seitenwände (16, 18) angeordnet ist.

4. Wischblattvorrichtung nach einem der vorhergehenden Ansprüche, **dadurch gekennzeichnet, dass** die Hauptkrümmung von einem Schwerpunkt (50) des Adapterelements (14) aus betrachtet konkav ist.

5. Wischblattvorrichtung nach einem der vorhergehenden Ansprüche, **dadurch gekennzeichnet, dass** die Seitenfläche (44) wenigstens abschnittsweise zumindest im Wesentlichen eine Form eines Teils eines Zylindermantels aufweist.

6. Wischblattvorrichtung nach einem der vorhergehenden Ansprüche, **gekennzeichnet durch** das Halteelement (21; 22).

7. Wischblattvorrichtung nach einem der vorhergehenden Ansprüche, **gekennzeichnet durch** das Lagerelement (38).

8. Wischblattvorrichtung nach Anspruch 7, **dadurch gekennzeichnet, dass** das Lagerelement (38) zumindest teilweise von einem Lagerbolzen (56) gebildet ist.

9. Wischblattvorrichtung zumindest nach den Ansprüchen 6 und 7, **dadurch gekennzeichnet, dass** das Halteelement einstückig mit dem Lagerelement ausgebildet ist.

10. Wischblattvorrichtung zumindest nach den Ansprüchen 7 und 8, **dadurch gekennzeichnet, dass** das Lagerelement (38) als separates Bauteil (60) ausgebildet ist.

11. Wischblattvorrichtung nach einem der Ansprüche 6 bis 10, **dadurch gekennzeichnet, dass** das Halteelement (22) unverlierbar mit dem Wischarm (26; 28) verbunden ist.

12. Wischblattvorrichtung zumindest nach einem der Ansprüche 6 bis 10, **dadurch gekennzeichnet, dass** das Halteelement (21; 22) als separates Bauteil (62; 64) mit dem Wischarm (24; 26) verbindbar ist.

13. Wischblattvorrichtung nach einem der Ansprüche 6 bis 12, **dadurch gekennzeichnet, dass** das Halteelement (21; 22) wenigstens eine Ausnehmung (66; 68, 69) zu einer Aufnahme des Lagerelements (38) aufweist.

14. Wischblattvorrichtung nach einem der Ansprüche 6 bis 13, **dadurch gekennzeichnet, dass** das Halteelement (21; 22) dazu vorgesehen ist, den Wischarm (24; 26; 28) zumindest formschlüssig an dem Adapterelement (14) drehbar zu befestigen.

15. Wischblattvorrichtung nach einem der Ansprüche 6 bis 14, **dadurch gekennzeichnet, dass** das Halteelement (22) ein Rastelement (70) zu einer Verbindung mit dem Wischarm (26) aufweist.

16. Wischblattvorrichtung nach einem der Ansprüche 6 bis 15, **dadurch gekennzeichnet, dass** das Halteelement (21) wenigstens eine Außenfläche (72) aufweist, welche zumindest abschnittsweise an eine Oberfläche (74) des Wischarms (24) angepasst ist.

17. Wischblattvorrichtung nach Anspruch 16, **dadurch gekennzeichnet, dass** die Außenfläche (72) in zumindest eine Richtung (48) wenigstens eine Hauptkrümmung aufweist

18. Wischblattvorrichtung nach einem der Ansprüche 6 bis 17, **dadurch gekennzeichnet, dass** der Wischarm (24) in wenigstens einem montierten Zustand zwischen dem Halteelement (21) und dem Adapterelement (14) zumindest formschlüssig gehalten ist.

19. Wischblattvorrichtung nach einem der vorhergehenden Ansprüche, **dadurch gekennzeichnet, dass** der Aufnahmebereich (20) an einer dem Hauptbauteil (10) abgewandten Seite zumindest teilweise offen ausgebildet ist.

20. Wischblattvorrichtung nach einem der vorhergehenden Ansprüche, **dadurch gekennzeichnet, dass** der Aufnahmebereich (20) an einer der weiteren Seitenwand (42) gegenüberliegenden Seite zumindest teilweise offen ausgebildet ist.

21. Wischblattvorrichtung nach einem der vorhergehenden Ansprüche, **dadurch gekennzeichnet dass** das Adapterelement (14) wenigstens eine Befestigungseinheit (76) aufweist, welche zu einer unmittelbaren und festen Verbindung mit einer Federleiste (78) des Wischblatts (11; 12; 13) vorgesehen ist.

22. Wischblatt (11; 12) mit einer Wischblattvorrichtung nach einem der vorhergehenden Ansprüche.

23. Wischvorrichtung mit einem Wischarm (24; 26) und einem Wischblatt (11; 12) nach Anspruch 22.

## Claims

1. Wiper blade device having an adapter element (14) which can be securely connected to a main component (10) of a wiper blade (11; 12; 13), a retention element (21, 22) for a wiper arm (24, 26) and a bearing element (38), wherein the adapter element (14) comprises at least two mutually opposed side walls (16, 18) which at least partially delimit a receiving region (20) for at least a portion of at least the retention element (21; 22), wherein at least one of the side walls (16, 18) has at least one recess (34, 36) which is constructed as a bearing opening (30, 32) for the bearing element (38), wherein the adapter element (14) comprises at least one other side wall (42) which has a side face (44) which faces the side walls (16, 18), wherein the side face (44) has at least one main curvature in at least one direction (48), wherein the side face (44) is constructed in such a manner that at least one surface (52) of the wiper arm (24) and/or at least one surface (54) of the retention element (22) in at least one assembled state at least partially abuts the side face (44), **characterized in that** the side face (44) is constructed in such a manner that, regardless of a rotation position of the wiper arm (24) and/or the retention element (22) relative to the adapter element (14), at least one surface (52) of the wiper arm (24) and/or a surface (54) of the retention element (22) always at least partially abuts the side face (44) in the assembled state.

2. Wiper blade device according to Claim 1, **characterized in that** the other side wall (42) connects the side walls (16, 18).

3. Wiper blade device according to Claim 1 or 2, **characterized in that** the side face (44) is arranged at least substantially perpendicularly relative to a main extent plane (46) of at least one of the side walls (16, 18).

4. Wiper blade device according to one of the preceding claims, **characterized in that** the main curvature is concave when viewed from a center of gravity (50) of the adapter element (14).

5. Wiper blade device according to one of the preceding claims, **characterized in that** the side face (44) at least partially is at least substantially in the form of a portion of a cylinder covering surface.

6. Wiper blade device according to one of the preceding claims, **characterized by** the retention element (21; 22) .

7. Wiper blade device according to one of the preceding claims, **characterized by** the bearing element (38).

8. Wiper blade device according to Claim 7, **characterized in that** the bearing element (38) is formed at least partially by a bearing pin (56).

9. Wiper blade device at least according to Claims 6 and 7, **characterized in that** the retention element is constructed integrally with the bearing element.

10. Wiper blade device at least according to Claims 7 and 8, **characterized in that** the bearing element (38) is constructed as a separate component (60).

11. Wiper blade device according to one of Claims 6 to 10, **characterized in that** the retention element (22) is connected to the wiper arm (26; 28) in a non-releasable manner.

12. Wiper blade device at least according to one of Claims 6 to 10, **characterized in that** the retention element (21; 22) can be connected to the wiper arm (24; 26) as a separate component (62; 64).

13. Wiper blade device according to one of Claims 6 to 12, **characterized in that** the retention element (21; 22) has at least one recess (66; 68, 69) for receiving the bearing element (38).

14. Wiper blade device according to one of Claims 6 to 13, **characterized in that** the retention element (21; 22) is provided to rotatably secure the wiper arm (24; 26; 28) to the adapter element (14), at least in a positive-locking manner.

15. Wiper blade device according to one of Claims 6 to 14, **characterized in that** the retention element (22) has a catch element (70) for connection to the wiper arm (26).

16. Wiper blade device according to one of Claims 6 to 15, **characterized in that** the retention element (21) has at least one outer face (72), which is at least partially adapted to a surface (74) of the wiper arm (24) .

17. Wiper blade device according to Claim 16, **characterized in that** the outer face (72) has at least one main curvature in at least one direction (48).

18. Wiper blade device according to one of Claims 6 to 17, **characterized in that** the wiper arm (24) in at least one assembled state is retained between the retention element (21) and the adapter element (14) at least in a positive-locking manner.

19. Wiper blade device according to one of the preceding claims, **characterized in that** the receiving region (20) is formed so as to be at least partially open at a side facing away from the main component (10) .

20. Wiper blade device according to one of the preceding claims, **characterized in that** the receiving region (20) is formed so as to be at least partially open at a side opposite the other side wall (42).

21. Wiper blade device according to one of the preceding claims, **characterized in that** the adapter element (14) has at least one fixing unit (76) which is provided for a direct and secure connection with respect to a resilient strip (78) of the wiper blade (11; 12; 13).

22. Wiper blade (11; 12) having a wiper blade device according to one of the preceding claims.

23. Wiper device having a wiper arm (24; 26) and a wiper blade (11; 12) according to Claim 22.

## Revendications

1. Dispositif de balai d'essuie-glace comprenant un élément adaptateur (14) pouvant être connecté fixement à un composant principal (10) d'un balai d'essuie-glace (11 ; 12 ; 13), un élément de retenue (21, 22) pour un bras d'essuie-glace (24, 26) et un élément de palier (38), l'élément adaptateur (14) comprenant au moins deux parois latérales (16, 18) opposées l'une à l'autre, qui délimitent au moins en partie une région de réception (20) pour au moins une partie d'au moins l'élément de retenue (21 ; 22), au moins l'une des parois latérales (16, 18) présentant au moins un évidement (34, 36) réalisé sous forme d'ouverture de palier (30, 32) pour l'élément de palier (38), l'élément adaptateur (14) comprenant au moins une paroi latérale supplémentaire (42) qui présente une surface latérale (44) tournée vers les parois latérales (16, 18), la surface latérale (44) présentant, dans au moins une direction (48), au moins une courbure principale, la surface latérale (44) étant configurée de telle sorte qu'au moins une surface (52) du bras d'essuie-glace (24) et/ou au moins une surface (54) de l'élément de retenue (22) s'appliquent au moins en partie contre la surface latérale (44) dans au moins un état monté, **caractérisé en ce que** la surface latérale (44) est configurée de telle sorte qu'au moins une surface (52) du bras d'essuie-glace (24) et/ou une surface (54) de l'élément de retenue (22), dans l'état monté, s'appliquent toujours, indépendamment d'une position de rotation du bras d'essuie-glace (24) et/ou de l'élément de retenue (22) par rapport à l'élément adaptateur (14), au moins en partie contre la surface latérale (44).

2. Dispositif de balai d'essuie-glace selon la revendication 1, **caractérisé en ce que** la paroi latérale supplémentaire (42) relie les parois latérales (16, 18).

3. Dispositif de balai d'essuie-glace selon la revendication 1 ou 2, **caractérisé en ce que** la surface latérale (44) est disposée au moins essentiellement perpendiculairement à un plan d'étendue principale (46) d'au moins l'une des parois latérales (16, 18).

4. Dispositif de balai d'essuie-glace selon l'une quelconque des revendications précédentes, **caractérisé en ce que** la courbure principale, vue depuis un centre de gravité (50) de l'élément adaptateur (14), est concave.

5. Dispositif de balai d'essuie-glace selon l'une quelconque des revendications précédentes, **caractérisé en ce que** la surface latérale (44) présente au moins en partie au moins essentiellement une forme d'une partie d'enveloppe de cylindre.

6. Dispositif de balai d'essuie-glace selon l'une quelconque des revendications précédentes, **caractérisé par** l'élément de retenue (21 ; 22).

7. Dispositif de balai d'essuie-glace selon l'une quelconque des revendications précédentes, **caractérisé par** l'élément de palier (38).

8. Dispositif de balai d'essuie-glace selon la revendication 7, **caractérisé en ce que** l'élément de palier (38) est formé au moins en partie par un boulon de palier (56).

9. Dispositif de balai d'essuie-glace au moins selon les revendications 6 et 7, **caractérisé en ce que** l'élément de retenue est réalisé d'une seule pièce avec l'élément de palier.

10. Dispositif de balai d'essuie-glace au moins selon les revendications 7 et 8, **caractérisé en ce que** l'élément de palier (38) est réalisé sous forme de composant séparé (60).

11. Dispositif de balai d'essuie-glace selon l'une quelconque des revendications 6 à 10, **caractérisé en ce que** l'élément de retenue (22) est connecté de manière imperdable au bras d'essuie-glace (26 ; 28) .

12. Dispositif de balai d'essuie-glace au moins selon l'une quelconque des revendications 6 à 10, **caractérisé en ce que** l'élément de retenue (21 ; 22) peut être connecté en tant que composant séparé (62 ; 64) au bras d'essuie-glace (24 ; 26).

13. Dispositif de balai d'essuie-glace selon l'une quelconque des revendications 6 à 12, **caractérisé en ce que** l'élément de retenue (21 ; 22) présente au moins un évidement (66 ; 68, 69) pour recevoir l'élément de palier (38).

14. Dispositif de balai d'essuie-glace selon l'une quelconque des revendications 6 à 13, **caractérisé en ce que** l'élément de retenue (21 ; 22) est prévu pour fixer le bras d'essuie-glace (24 ; 26 ; 28) de manière rotative au moins par engagement par correspondance de formes à l'élément adaptateur (14) .

15. Dispositif de balai d'essuie-glace selon l'une quelconque des revendications 6 à 14, **caractérisé en ce que** l'élément de retenue (22) présente un élément d'encliquetage (70) en vue d'une connexion au bras d'essuie-glace (26).

16. Dispositif de balai d'essuie-glace selon l'une quelconque des revendications 6 à 15, **caractérisé en ce que** l'élément de retenue (21) présente au moins une surface extérieure (72) qui est adaptée au moins en partie à une surface (74) du bras d'essuie-glace (24).

17. Dispositif de balai d'essuie-glace selon la revendication 16, **caractérisé en ce que** la surface extérieure (72) présente au moins une courbure principale dans au moins une direction (48).

18. Dispositif de balai d'essuie-glace selon l'une quelconque des revendications 6 à 17, **caractérisé en ce que** le bras d'essuie-glace (24) est retenu au moins par engagement par correspondance de formes dans au moins un état monté entre l'élément de retenue (21) et l'élément adaptateur (14).

19. Dispositif de balai d'essuie-glace selon l'une quelconque des revendications précédentes, **caractérisé en ce que** la région de réception (20) est réalisée au moins en partie sous forme ouverte au niveau d'un côté opposé au composant principal (10) .

20. Dispositif de balai d'essuie-glace selon l'une quelconque des revendications précédentes, **caractérisé en ce que** la région de réception (20) est réalisée au moins en partie sous forme ouverte au niveau d'un côté opposé à la paroi latérale supplémentaire (42).

21. Dispositif de balai d'essuie-glace selon l'une quelconque des revendications précédentes, **caractérisé en ce que** l'élément adaptateur (14) présente au moins une unité de fixation (76) qui est prévue en vue d'une connexion directe et fixe à une raclette élastique (78) du balai d'essuieglace (11 ; 12 ; 13).

22. Balai d'essuie-glace (11 ; 12) comprenant un dispositif de balai d'essuie-glace selon l'une quelconque des revendications précédentes.

23. Dispositif d'essuyage comprenant un bras d'essuieglace (24 ; 26) et un balai d'essuie-glace (11 ; 12) selon la revendication 22.
